Europäisches Patentamt

European Patent Office

Office européen des brevets

(11) Publication number: **0 422 802 A1**

## EUROPEAN PATENT APPLICATION

(21) Application number: **90310587.2**

(22) Date of filing: **27.09.90**

(51) Int. Cl.⁵: **H04B 14/06, H04L 1/00**

(30) Priority: **12.10.89 GB 8922962**

(43) Date of publication of application:
**17.04.91 Bulletin 91/16**

(84) Designated Contracting States:
**DE ES FR GB IT**

(71) Applicant: **STC PLC**
**1B Portland Place**
**London W1N 3AA(GB)**

(72) Inventor: **Humphrey, Leslie Derek**
**9 Swallows**
**Harlow, Essex, CM17(GB)**
Inventor: **Wallace, Andrew David**
**2 Jay Court, Arkwrights**
**Harlow, Essex, CM20 3NCX(GB)**

(74) Representative: **Dennis, Mark Charles et al**
**STC Patents West Road**
**Harlow Essex CM20 2SH(GB)**

(54) **Speech codec arrangement.**

(57) A speech codec arrangement including a speech encoder and decoder characterised in that the codec further includes means for detecting (30,31) in received signals input codewords which a corresponding speech encoder should never produce in normal operation, means for estimating the error rate of the abnormal codewords, means for generating a control signal (33,35,36) in response to the estimated error rate exceeding a predetermined threshold, means for generating preferred codewords and means responsive to said control signal to replace abnormal codewords with preferred codewords for the duration of the control signal.

Fig.3.

# SPEECH CODEC ARRANGEMENT

This invention relates to speech codec arrangements for muting a voice band signal when the error rate in an ADPCM channel exceeds a predetermined threshold.

When the error rate in a digital speech channel becomes excessively high the listener can be subjected to unacceptably high level bursts of noise, whether the speech channel is active or idle.

It is an object of the present invention to provide protection for the listener when the error rate becomes high by automatic muting and/or attenuation of the speech signal by an amount dependent on the estimated error rate, without increasing the bit rate required for the coded speech data.

According to the invention a speech codec arrangement includes means for detecting predetermined illegal codewords in a received coded bit stream, means for estimating the current bit error rate from the detection of illegal codewords, means for generating a control signal in response to a predetermined level of the estimated error rate, means for generating preferred codewords, and means responsive to said control signal to replace codewords with preferred codewords for the duration of the control signal.

Embodiments of the invention will now be described with reference to the accompanying drawings, in which:-

Fig. 1 is a schematic diagram of an illegal codeword muting arrangement for an ADPCM decoder,

Fig. 2 is a schematic diagram of an alternative arrangement to that of Fig. 1,

Fig. 3 is a schematic diagram of a complete implementation of an ADPCM muter.

Fig. 4 is a schematic diagram depicting a modified ADPCM encoder,

Fig. 5 is a schematic diagram of muting arrangement for a modified ADPCM channel,

Fig. 6 is a schematic diagram of an alternative arrangement to that of Fig. 4.

Fig. 7 shows a modified form of the muting arrangement of Fig. 1, and

Fig. 8 shows a modified form of the muting arrangement of Fig. 5.

In the following description references to ADPCM codecs relate to Adaptive Differential PCM codecs with particular relevance to codecs conforming to the CCITT G721 standards.

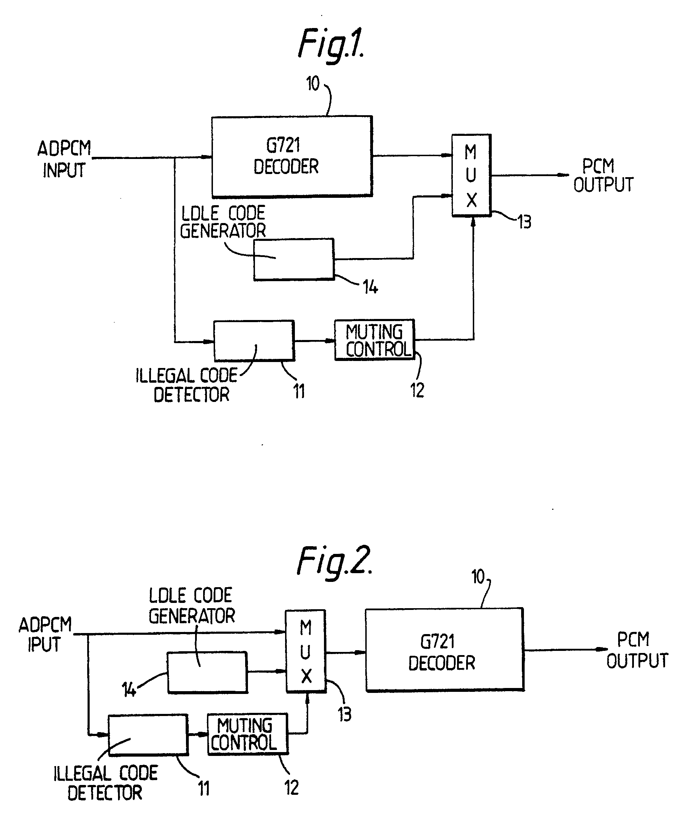

In the arrangement shown in Fig. 1 the ADPCM input to G721 decoder 10 is also fed to an illegal code detector 11 the output of which is applied to a muting control circuit 12. The arrangement exploits the fact that a code of '0000' should never be received by a G721 ADPCM decoder operating over an error free transmission channel.

However, in the presence of errors in the transmission channel the four valid codes '0001', '0010', '0100' and '1000' can each be transformed into the illegal code '0000' by corruption of a single bit. Each time that an illegal code '0000' is received the illegal code detector 11 produces an output signal, e.g. a logic level 'high. The muting control circuit 12 conveniently comprises a filter followed by a comparator. The filter output may be used directly as an indication of the current bit error rate. This output is then compared against a predetermined threshold to provide a muting control signal when the threshold is exceeded. The comparator may usefully have a defined amount of hysteresis to give the muting control circuit a minimum hangover time. The muting control signal is applied to control a multiplexer 13. The PCM output of the G721 decoder is fed as one input to the multiplexer. An idle code generator 14 provides the other input to the multiplexer. When a muting control signal is present the multiplexer replaces the output of the decoder with idle codes. This method of operation of the muting process allows the decoder to operate as far as possible in synchronism with the encoder, because the ADPCM codes are still passed to the decoder even when the muting control is enabled.

In the alternative arrangement shown in Fig. 2 the muting control acts on the input to the G721 decoder. The incoming code stream is intercepted by the multiplexer 13 before it reaches the decoder. When the estimated channel error rate indicated by the detector 11 and muting control circuit 12 becomes too high the arrangement acts to substitute idle code groups, i.e. '1111' for the incoming code words at the input to the decoder. This will cause the output of the ADPCM decoder to decay down to zero over a short period of time, typically a few milliseconds, but prevents any possibility of the decoder remaining roughly in synchronisation with the encoder.

The filter and comparator circuits can be implemented in either analogue or digital circuitry. For example an RC low-pass filter with a suitable time constant can be used as an analogue filter, or a leaky integrator can be used as a digital filter. Similarly an operational amplifier with a small amount of positive feedback, or its digital equivalent, can be used as the comparator with hysteresis.

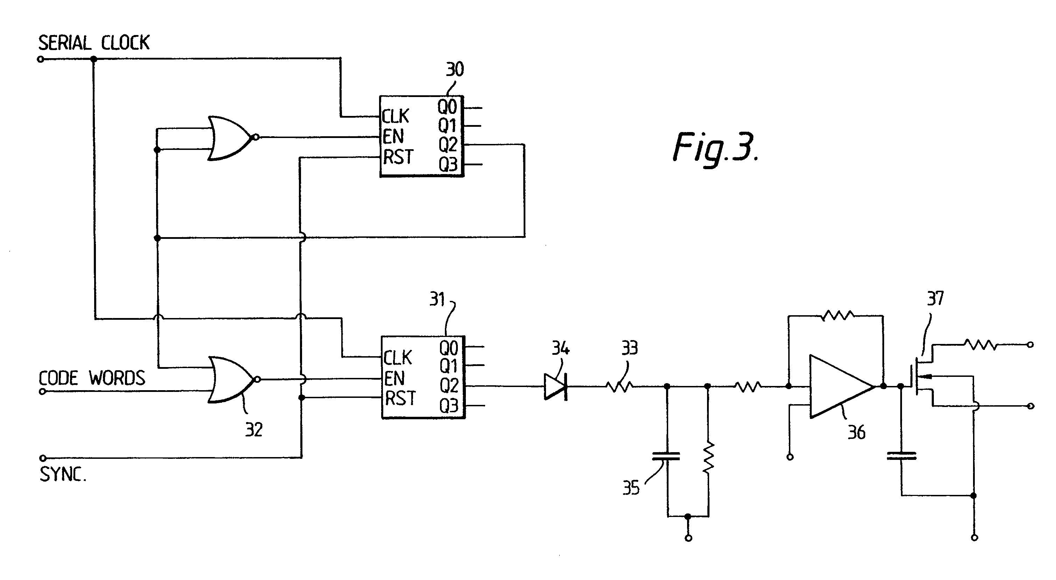

A third possibility is for the control signals to mute the output signal from the ADPCM decoder after digital to analogue conversion. This is the approach adopted in the complete muter implementation shown in Fig. 3.

It should be noted that none of the above arrangements require any modifications to the ADPCM encoder, and therefore the muting action will be effective when interworking with any third party G721 ADPCM encoder.

The filter and comparator circuits can be implemented in either analogue or digital circuitry. One implementation of an ADPCM muter is shown in Figure 3 and described below. It is assumed that the circuit is given serial ADPCM codewords, a serial clock, and a synchronising signal which goes high for one clock cycle immediately prior to the arrival of the ADPCM codeword. The synchronisation signal is used to clear two four-bit counters 30,31. The first of these counters 30 is arranged to mark the four bit periods immediately after the synchronisation signal, by connecting an inverted version of its Q2 output to its enable input EN. Thus when the counter 30 is cleared by the synchronisation signal at RST, Q2 goes low, and hence the enable goes high. The counter then starts to count upwards until a count of four is reached, at which point the enable input is forced low, and the count stops. The output Q2 is thus low solely for the duration of the four clock cycles after the synchronisation signal. The ADPCM codeword is combined with this marker signal by a two-input NOR gate 32, whose outputs will therefore be high if and only if the ADPCM data input is zero during the four clock cycles after the synchronisation signal. The resulting signal is used as an enable on the second counter 31, which will therefore count how many of the ADPCM bits are set to zero. Only if all four ADPCM data bits are zero will the Q2 output of the second counter 31 go high.

The Q2 output of this counter 31 is fed through the resistor 33 and diode 34 network to a capacitor 35. This implements a fast attack, slow decay filter. The capacitor in turn is connected to a comparator 36, with hysteresis. The output of this comparator 36, possibly retimed by the ADPCM synchronisation word, is used as the muter control signal. The time constants and hysteresis level are chosen such that an isolated illegal code does not cause a mute, but that two such illegal codes within a short period, say 6 ms, would cause muting. The hysteresis guarantees a minimum hangover time for the mute condition, with 6 ms again being a reasonable minimum.

The muter control signal is then used to control an analogue switch 37 such that the output from the digital to analogue converter which follows the ADPCM decoder is substantially reduced, typically by 30 dB, for the duration of the muter control signal. This has the advantage for cordless radio products that the listener will still hear the noise introduced by loss of the digital link, but at a comfortable level. In practice the muter switch can be used to short across a high value resistor employed to control the gain of the digital-to-analogue converter (not shown).

Fig. 3 shows how the encoder in a G721 ADPCM codec can be modified by the addition of a block parity encoder. Parity checking is a well-known technique used for detecting errors in digital bit streams. In the present case the ADPCM code stream from the G721 encoder 20 is intercepted by the block parity encoder 21. For parity encoder purposes the end of a block is defined by the occurrence of a '1111' code in the G721 encoder output. This '1111' code is transmitted if the parity of the block is even. If the parity of the block so far is odd then the '1111' code is replaced by a '0000' code.

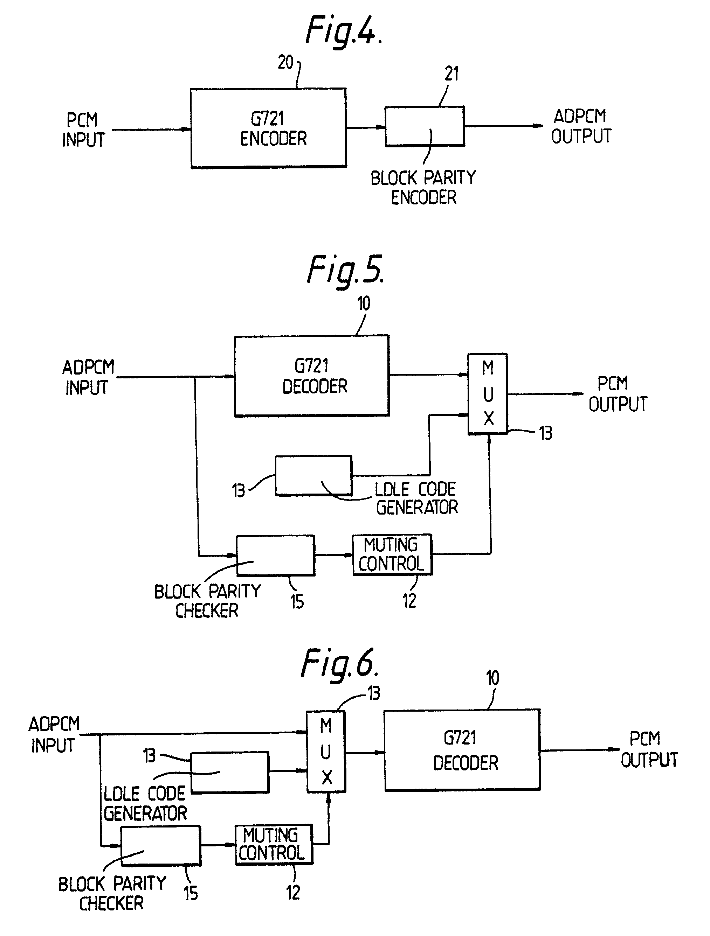

For the decoder 10, Fig. 5, the incoming bit stream is intercepted by a block parity checker circuit 15, which considers blocks to be delimited by '0000'/'1111' codes. If code '0000' is considered to have odd parity then the parity of a block including the end marker should always be even, and a block which has odd parity is therefore a direct indication that an error has occurred within that block. As in the arrangements of Figs. 1 & 2 so in the arrangement of Fig. 5 the output of the block parity checker is applied to a muting control circuit 12 which estimates the current channel bit error rate and causes multiplexer 13 to insert idle codes in place of the output of the decoder 10 when the bit error rate is deemed to be too high. The arrangement of Fig. 6 corresponds to that of Fig. 2, wherein the codes will be inserted at the input to the ADPCM decoder whenever the muting control circuit indicates a period of high bit error rate. One final function performed by the block parity checker is to replace all '0000' codes by '1111' codes before passing them on to the ADPCM decoder, since they are not handled identically by the G721 ADPCM algorithm.

The filter and comparator can be implemented as in the arrangements of Fig. 1 or 2, although for Fig. 5 or 6 it may be preferable to use a digital filter which is clocked only on incoming parity block boundaries. This would prevent the muting action from being removed should the time between successive '1111' codes become large at the ADPCM encoder output, as can happen during a loud speech burst.

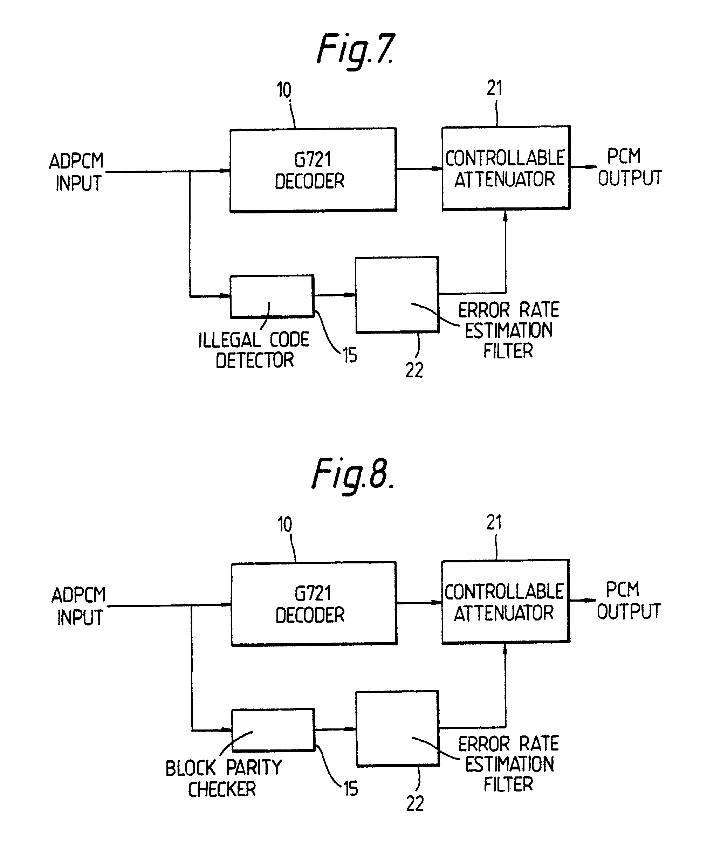

In the embodiments where the muting control is applied at the ADPCM decoder output, either in analogue or digital form, simple muting can be replaced by a more elaborate arrangement employing variable attenuation such that the output signal level of the decoder reduces progressively as the error rate increases. This technique is illustrated in Figs. 7 and 8 which show modifications of Figs. 1 and 5 respectively. In the arrangement of Figs. 7 and 8 the output of the decoder 10 is progressively attenuated by the attenuator 21 as the estimated bit error rate determined via the rate estimation filter 22 increases. This gives the user more feedback than does a simple muting, for example about the location of radio nulls to be avoided in personal radio communications terminal applications.

**Claims**

1. A speech codec arrangement including a speech encoder and decoder characterised in that the codec further includes means for detecting (30,31) in received signals input codewords which a corresponding speech encoder should never produce in normal operation, means for estimating (33,35) the error rate of the abnormal codewords, means for generating a control signal (36) in response to the estimated error rate exceeding a predetermined threshold, means for generating preferred codewords and means responsive to said control signal to replace abnormal codewords with preferred codewords for the duration of the control signal.

2. An arrangement according to claim 1 wherein said means for replacing is arranged to replace incoming codewords at the input to the speech decoder for the duration of the control signal.

3. An arrangement according to claim 1, wherein the decoder comprises a code conversion means, said detecting means is arranged to detect abnormal codewords at the input to the speech decoder and said means for replacing is arranged to replace the speech decoder output codewords with preferred codewords for the duration of the control signal.

4. An arrangement according to claim 1 wherein said detecting means is arranged to replace the analogue representation of the speech decoder output with a preferred analogue signal for the duration of the control signal.

5. An arrangement according to claims 1, 2 or 3 where said preferred codewords are idle codes.

6. An arrangement according to claim 4 where said preferred analogue signal is an idle signal.

7. An arrangement according to any preceding claim wherein said detecting means comprises block parity checking means for received signals incorporating block parity signals.

8. An arrangement according to any preceding claim wherein said preferred codewords include a variable attenuation component whereby the output signal level of the decoder reduces progressively as the rate of illegal codewords increases.

# Fig.1.

# Fig.2.

Fig.3.

SERIAL CLOCK

CODE WORDS

SYNC.

EP 0 422 802 A1

# Fig.4.

```
                    20                      21
PCM              ┌──────────────┐     ┌──────────┐        ADPCM
INPUT   ────────▶│     G721     │────▶│          │───────▶ OUTPUT
                 │   ENCODER    │     │          │
                 └──────────────┘     └──────────┘
                                      BLOCK PARITY
                                        ENCODER
```

# Fig.5.

```
                              10
ADPCM                    ┌──────────────┐        ┌───┐
INPUT  ─────────┬───────▶│     G721     │───────▶│ M │        PCM
                │        │   DECODER    │        │ U │──────▶ OUTPUT
                │        └──────────────┘    ┌──▶│ X │
                │                            │   └───┘
                │         ┌──────────┐       │      13
                │    13 ──│          │───────┘
                │         └──────────┘
                │          LDLE CODE
                │          GENERATOR
                │
                │    ┌──────────┐   ┌──────────┐
                └───▶│          │──▶│ MUTING   │──┐
                     │          │   │ CONTROL  │  │
                     └──────────┘   └──────────┘  │
                    BLOCK PARITY        │
                      CHECKER  15       12
```

# Fig.6.

```
                                    13            10
ADPCM                           ┌───┐       ┌──────────────┐
INPUT  ─────┬──────────────────▶│ M │       │     G721     │        PCM
            │      13            │ U │──────▶│   DECODER    │──────▶ OUTPUT
            │   ┌──────────┐  ┌─▶│ X │       └──────────────┘
            │   │          │──┘  └───┘
            │   └──────────┘       │
            │    LDLE CODE         │
            │    GENERATOR         │
            │                      │
            │ ┌──────────┐  ┌──────────┐
            └▶│          │─▶│ MUTING   │──┘
              │          │  │ CONTROL  │
              └──────────┘  └──────────┘
             BLOCK PARITY       │
               CHECKER  15      12
```

## Fig.7.

ADPCM
INPUT

G721
DECODER
10

CONTROLLABLE
ATTENUATOR
21

PCM
OUTPUT

ILLEGAL CODE
DETECTOR
15

ERROR RATE
ESTIMATION
FILTER
22

## Fig.8.

ADPCM
INPUT

G721
DECODER
10

CONTROLLABLE
ATTENUATOR
21

PCM
OUTPUT

BLOCK PARITY
CHECKER
15

ERROR RATE
ESTIMATION
FILTER
22

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 025 176 (PHILIPS)<br>* Page 1, line 118 - page 2, line 5; page 2, lines 42-82; page 4, lines 90-121; page 5, lines 9-16 *<br>— — — | 1 | H 04<br>B 14/06<br>H 04 L 1/00 |
| A | | 3,5 | |
| Y | GB-A-1 369 946 (MEL EQUIPMENT)<br>* Page 1, lines 58-68; page 1, line 80 - page 2, line 4; page 3, lines 85-125; page 4, lines 66-90 *<br>— — — | 1 | |
| A | | 4 | |
| Y | DE-A-3 020 257 (HITACHI)<br>* Page 6, paragraph 1; page 8. lines 12-32; page 10, last paragraph - page 13, line 23 *<br>— — — | 1 | |
| A | | 7,8 | |
| A | GB-A-1 326 562 (GEC)<br>* Whole document *<br>— — — — — | 1 | |

| | | | TECHNICAL FIELDS SEARCHED (Int. Cl.5) |
|---|---|---|---|
| | | | H 04 B<br>H 04 L |

The present search report has been drawn up for all claims

| Place of search | Date of completion of search | Examiner |
|---|---|---|
| The Hague | 21 January 91 | HOLPER G.E.E. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document